# EUROPEAN PATENT APPLICATION

(11) **EP 4 557 844 A1**
(43) Date of publication of application: **21.05.2025**
(21) Application number: 23839911.7
(22) Date of filing: 10.07.2023
(51) Int. Cl.: H04W 56/00, H04W 48/08, H04W 84/06

(54) **AIR TO GROUND COMMUNICATION**

(30) Priority: 11.07.2022 US 202263359900 P; 29.09.2022 US 202263411152 P; 04.11.2022 US 202263422439 P
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); HUH, Joongkwan, Seoul 06772 (KR); PARK, Jinwoong, Seoul 06772 (KR)
(74) Representative: Maikowski & Ninnemann Patentanwälte Partnerschaft mbB
(86) International application number: PCT/KR2023/009801
(87) International publication number: WO 2024/014818

(57) **Abstract**

One disclosure of the present disclosure provides a UE performing communication. The UE comprises: one or more transceivers; one or more processors; and one or more memories which store instructions and can be operably and electrically connected to the one or more processors, wherein an operation performed on the basis of the instructions being executed by the one or more processors includes the steps of: receiving a system information message from a serving cell; and transmitting an uplink signal on the basis of a timing advance value.

## Description

### TECHNICAL FIELD

The present disclosure relates to a radio communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Communication between an aircraft or airplane and a base station on the ground is being discussed. The aircraft or airplane may be referred to, for example, as an Air to Ground (ATG) User Equipment (UE). However, due to timing delays between the base station on the ground and the ATG UE, efficient communication has not been achieved in the past.

### DISCLOSURE

### TECHNICAL SOLUTION

In one aspect, a UE for performing communications is provided. The UE includes one or more transceivers; one or more processors; and one or more memories storing instructions and operably electrically coupled to the one or more processors, wherein the instructions are executed by the one or more processors, and wherein the operationsperformed based on the instructions being executed by the one or more processors include: receiving a system information message from the serving cell; and transmitting, based on the timing advance value, an uplink signal.

In another aspect, a method is provided that includes performing operations by a UE.

In one aspect, a serving cell for performing communications is provided. The serving cell includes one or more transceivers; one or more processors; and one or more memories storing instructions and operably electrically coupled to the one or more processors, wherein the instructions are executed by the one or more processors, and wherein operations performed based on the instructions being executed by the one or more processors include: transmitting a system information message to a UE; and receiving an uplink signal from the UE.

In another aspect, a method is provided that includes performing an action on a serving cell.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 is a diagram showing an example of a communication structure that can be provided in a 6G system.
FIG. 5 shows an example of an electromagnetic spectrum.
FIG. 6 shows an example schematically illustrating the relationship between uplink timing and downlink timing.
FIG. 7 illustrates an example in which ATG communication is performed.
FIGS. 8a and 8b illustrate an example of overlapping ULs and DLs due to delay, according to one embodiment of the disclosure.
FIG. 9 illustrates a first example of a method for calculating propagation delay.
FIG. 10 illustrates a second example of a method of calculating propagation delay.
FIG. 11 illustrates an example of a scheduling restriction based on propagation delay, according to one embodiment of the disclosure.
FIG. 12 illustrates an example of a procedure for a network to enable or disable deriveSSB-IndexFromCell, according to one embodiment of the disclosure.
FIG. 13 illustrates one example of a procedure for a UE to enable or disable deriveSSB-IndexFromCell, according to one embodiment of the present disclosure.
FIG. 14 illustrates an example of an SMTC window and SS/PBCH block (SSB) (or Synchronization Signal Block) configuration, according to one embodiment of the disclosure.
FIG. 15 illustrates an example of operation according to one embodiment of the disclosure.

### MODE FOR INVENTION

The following techniques, devices and systems can be applied to various wireless multiple access systems. Examples of multiple access systems include CDMA (Code Division Multiple Access) systems, FDMA (Frequency Division Multiple Access) systems, TDMA (Time Division Multiple Access) systems, OFDMA (Orthogonal Frequency Division Multiple Access) systems, SC-FDMA (Single Carrier Frequency Division Multiple Access) systems, and MC-FDMA (Multi-Carrier Frequency Division Multiple Access) systems. CDMA can be implemented through wireless technologies such as Universal Terrestrial Radio Access (UTRA) or CDMA2000. TDMA can be implemented through wireless technologies such as Global System for Mobile Communications (GSM), General Packet Radio Service (GPRS), or Enhanced Data Rates for GSM Evolution (EDGE). OFDMA can be implemented through wireless technologies such as IEEE 802.11 (Wi-Fi), IEEE 802.16 (WiMAX), IEEE 802.20, or E-UTRA (Evolved UTRA). UTRA is part of the Universal Mobile Telecommunications System (UMTS). 3GPP (3rd Generation Partnership Project) LTE (Long-Term Evolution) is part of E-UMTS (Evolved UMTS) using E-UTRA. 3GPP LTE uses OFDMA for the downlink (DL) and SC-FDMA for the uplink (UL).

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regard to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein may be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

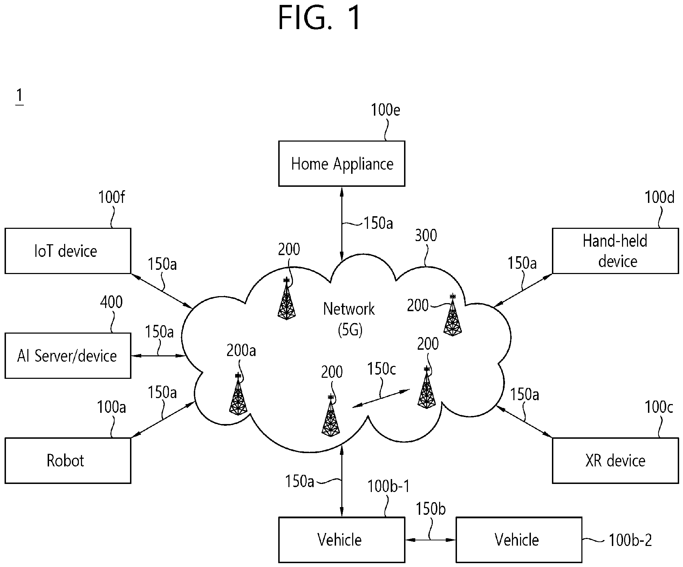

FIG. 1 shows an example of a communication system to which implementations of the present disclosure is applied.

The 5G usage scenarios shown in FIG. 1 are only exemplary, and the technical features of the present disclosure may be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with re-constructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and may be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that may create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions may be called intelligent robots. Robots may be classified as industrial, medical, home, military, etc., depending on the purpose or area of use. The robot may perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles may be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area may be supported in traditional cellular bands, and if SCS is 30 kHz/60 kHz, dense-urban, lower latency, and wider carrier bandwidth may be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW). FR2 may include FR 2-1 and FR 2-2, as shown in the examples in Table 1 and Table 2.

**[Table 1]**

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

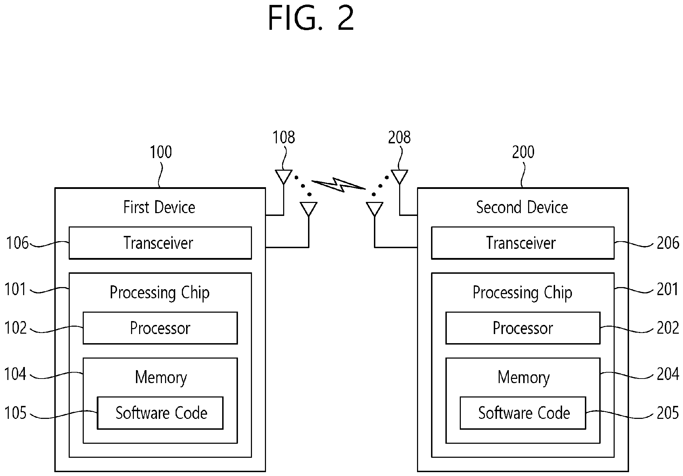

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

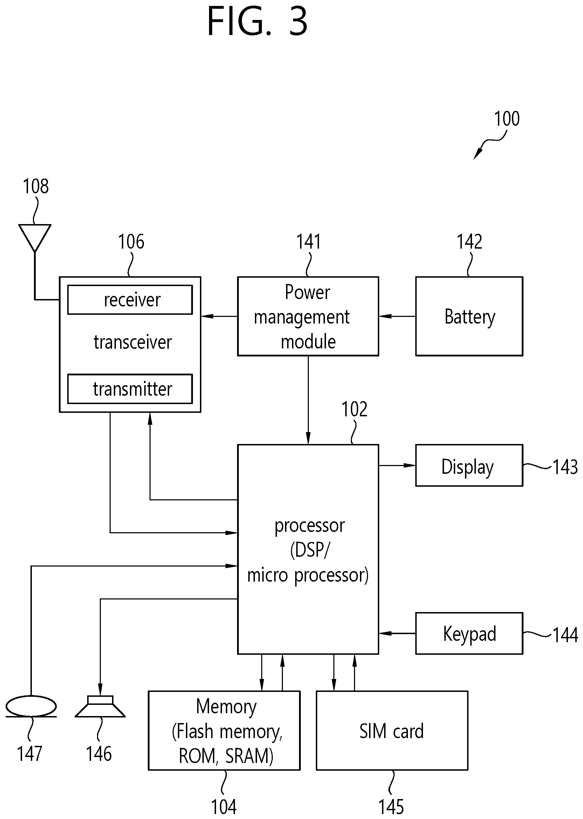

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

### <Operating bands of NR>.

### The operating bands in NR are as follows

The operating bands in Table 3 below are the refarmed operating bands from the operating bands of LTE/LTE-A. This is referred to as the FR1 band.

**[Table 3]**

| NR operating bands | Uplink (UL) operating band | Downlink(DL) operating band | Duplex Mode |
|---|---|---|---|
| | F_{UL_low} - F_{UL_high} | F_{DL_low} - F_{DL_high} | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

**[Table 4]**

| NR Operating band | Uplink (UL) operating band | Downlink(DL) operating band | Duplex Mode |
|---|---|---|---|
| | F_{UL_low} - F_{UL_high} | F_{DL_low} - F_{DL_high} | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

### <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

**[Table 5]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

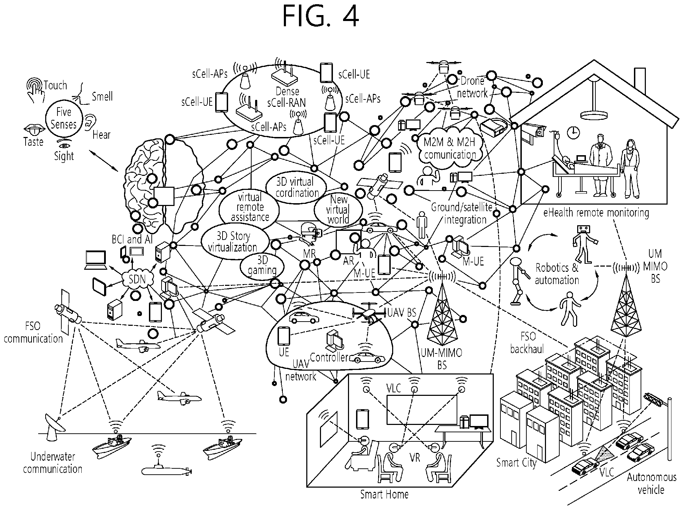

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

### Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural network (SNN). Such a learning model is applicable.

### THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

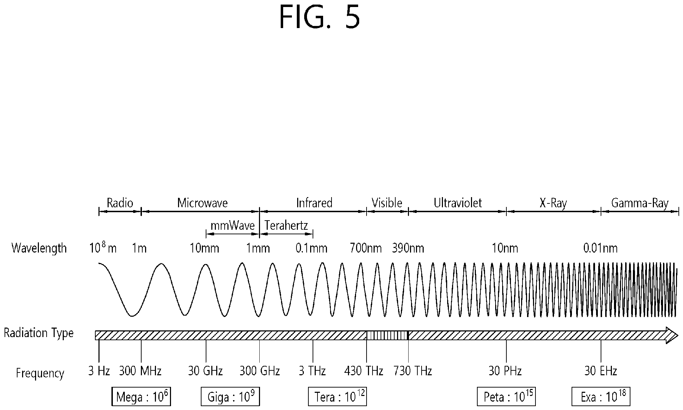

FIG. 5 shows an example of an electromagnetic spectrum.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Optical wireless technology

Optical wireless communication (OWC) is a form of optical communication that uses visible light, infrared light (IR), or ultraviolet light (UV) to carry signals. OWC operating in the visible light band (e.g., 390 to 750 nm) is commonly referred to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/unlicensed and can provide extensive bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communication security and privacy. The transmission medium of VLC-based networks, namely visible light, cannot pass through walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). Laser transmitters may be used in FSO implementations, and FSO can provide high data rates (e.g., 10 Gbit/s), providing a potential solution to backhaul bottlenecks.

These OWC technologies are planned for 6G communications in addition to RF-based communications for all possible device-to-access networks. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully automated driving of cars.

### FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Non-Terrestrial Networks (NTN)

The 6G system will integrate terrestrial and aerial networks to support vertically expanding user communications. 3D BS will be delivered via low-orbit satellites and UAVs. Adding a new dimension in terms of altitude and associated degrees of freedom makes 3D connectivity quite different from traditional 2D networks. NR considers Non-Terrestrial Networks (NTNs) as one way to accomplish this. An NTN is a network or network segment that uses RF resources aboard a satellite (or UAS platform). There are two common scenarios for NTNs that provide access to user equipment: transparent payloads and regenerative payloads. The following are the basic elements of an NTN.
- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensures service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the onboard antenna diagram and the minimum angle of attack.
- Transparent payload: Radio frequency filtering, frequency conversion, and amplification, so the waveform signal repeated by the payload is unchanged.
- Regenerative payload: radio frequency filtering, frequency conversion and amplification, demodulation/decryption, switching and/or routing, and coding/modulation. This is effectively the same as having all or part of the base station functions (e.g., gNB) on board a satellite (or UAS platform).
- For satellite deployments, optionally an inter-satellite link (ISL). This requires a regenerative payload on the satellite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemispheres. In some cases, constellations can also provide global coverage, including polar regions. The latter requires proper orbital inclination, sufficient beams generated, and links between satellites.

### Quantum Communication

Quantum communication is a next-generation communication technology that can overcome the limitations of conventional communication such as security and high-speed computation by applying quantum mechanical properties to the field of information and communication. Quantum communication provides a means of generating, transmitting, processing, and storing information that cannot be expressed in the form of 0s and 1s according to the binary bit information used in existing communication technologies. In conventional communication technologies, wavelengths or amplitudes are used to transmit information between the transmitting and receiving ends, but in quantum communication, photons, the smallest unit of light, are used to transmit information between the transmitting and receiving ends. In particular, in the case of quantum communication, quantum uncertainty and quantum irreversibility can be used for the polarization or phase difference of photons (light), so quantum communication has the characteristic of being able to communicate with perfect security. In addition, quantum communication can also enable ultra-high-speed communication using quantum entanglement under certain conditions.

### Cell-free Communication

Tight integration of multiple frequencies and heterogeneous communication technologies is critical in 6G systems. As a result, users can seamlessly move from one network to another without having to create any manual configurations on their devices. The best network is automatically selected from the available communication technologies. This will break the limitations of the cell concept in wireless communication. Currently, user movement from one cell to other causes too many handovers in dense networks, resulting in handover failures, handover delays, data loss, and ping-pong effects. 6G cell-free communication will overcome all this and provide better QoS.

Cell-free communication is defined as "a system in which a large number of geographically distributed antennas (APs) cooperatively serve a small number of terminals using the same time/frequency resources with the help of a fronthaul network and a CPU". A single terminal is served by a set of multiple APs, which is called an AP cluster. There are several ways to form AP clusters, among which the method of configuring AP clusters with APs that can significantly contribute to improving the reception performance of the terminal is called the terminal-centered clustering method, and when using this method, the configuration is dynamically updated as the terminal moves. By adopting this device-centric AP clustering technique, the device is always at the center of the AP cluster and is therefore free from inter-cluster interference that can occur when the device is located at the boundary of the AP cluster. This cell-free communication will be achieved through multi-connectivity and multi-tier hybrid technologies and different heterogeneous radios in the device.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Surface

There is a large body of research that considers the radio environment as a variable to be optimized along with the transmitter and receiver. The radio environment created by this approach is referred to as a Smart Radio Environment (SRE) or Intelligent Radio Environment (IRE) to highlight its fundamental differences from past design and optimization criteria. Various terms have been proposed for the reconfigurable intelligent antenna (or intelligent reconfigurable antenna technology) technology that enables SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas, strengthening communication stability and enabling additional value-added services. RIS is an artificial surface made of electromagnetic materials that can alter the propagation of incoming and outgoing radio waves. While RIS can be seen as an extension of massive MIMO, it has a different array structure and operating mechanism than massive MIMO. RIS also has the advantage of lower power consumption because it operates as a reconfigurable reflector with passive elements, meaning it only passively reflects the signal without using an active RF chain. In addition, each of the passive reflectors in the RIS must independently adjust the phase shift of the incident signal, which can be advantageous for wireless communication channels. By properly adjusting the phase shift through the RIS controller, the reflected signal can be gathered at the target receiver to boost the received signal power.

In addition to reflecting radio signals, there are also RISs that can adjust transmission and refraction properties, and these RISs are mainly used for O2I (Outdoor to Indoor). Recently, STAR-RIS (Simultaneous Transmission and Reflection RIS), which provides transmission while reflecting, has also been actively researched.

### Metaverse

Metaverse is a portmanteau of the words "meta" meaning virtual, transcendent, and "universe" meaning space. Generally speaking, the metaverse is a three-dimensional virtual space where the same social and economic activities as in the real world are commonplace.

Extended Reality (XR), a key technology enabling the Metaverse, is the fusion of the virtual and the real, which can extend the experience of reality and provide a unique sense of immersion. The high bandwidth and low latency of 6G networks will enable users to experience more immersive virtual reality (VR) and augmented reality (AR) experiences.

### Autonomous Driving, Self-driving

For perfect autonomous driving, vehicles must communicate with each other to inform each other of dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), for autonomous driving.

In order to maximize the performance of autonomous driving and ensure high safety, fast transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

### Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

### <Timing Advance; TA)>

The following describes timing advances (TA) related to the transmission of signal(e.g., NR UL signal transmission or NR V2X or SL signal transmission) on a particular carrier.
1. The symbols and abbreviations related to timing advance values are shown below.
   - Tₛ: The default time unit. Note that T^{c} can also be used as the default time unit instead of Tₛ. For example, in NR-based communications, Tc may be used as the default time unit.
   - N_{TA}: Timing offset between uplink and downlink at the terminal, expressed in units of Tₛ
   - N_{TA offset}: Fixed timing advance offset, expressed in units of Tₛ
   - N_{TA,SL}: Timing offset between sidelink and timing reference frames at the terminal, expressed in units of Ts
2. Frame structure

In the time domain, the size of the various fields can be expressed in terms of the number of time units, e.g., Tₛ=1/(15000x2048) seconds. Note that if Tc is used, T_{c}= Tₛ /64.

Downlink, uplink, and sidelink transmissions can be configured into radio frames with a duration of T_{f}=307200xTₛ=10ms

Below, two radio frame structures may be supported.
- Type 1: applicable for FDD
- Type 2: Applicable to TDD

Transmissions in multiple cells can be aggregated with up to four secondary cells in addition to the primary cell. In a multi-cell aggregation, different frame structures may be used in different serving cells.

### 3. Uplink - downlink frame timing

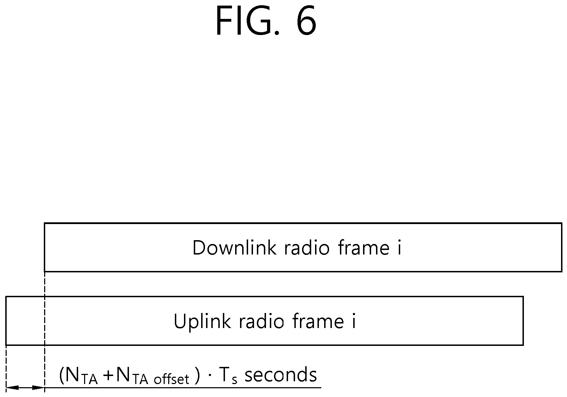

**FIG. 6** **shows an example schematically illustrating the relationship between uplink timing and downlink timing.**

As shown in FIG. 6, the transmission of uplink radio frame number i from the terminal may start as early as (N_{TA}+N_{TAoffset})xTs seconds prior to the corresponding downlink radio frame from the terminal. (wherein, 0<=N_{TA}<=20412)

Here, for LTE, for frame structure type 1, the N_{TAoffset} is '0Ts (=0us)', and for frame structure type 2, the N_{TAoffset} can be '624Ts (=20us)'.

For NR, the following may apply
For Frame Structure Type 1 and Frame Structure Type 2, if NR and LTE do not coexist in the same frequency band corresponding to Frequency Range 1, the N_{TAoffset} may be equivalent to '25600Tc(=400Ts=13us)';
For Frame Structure Type 1, when NR and LTE coexist in the same frequency band corresponding to Frequency Range 1, the N_{TAoffset} may correspond to '0Tc(=0Ts=0us)';
For frame structure type 2, when NR and LTE coexist in the same frequency band corresponding to Frequency Range 1, the N_{TAoffset} can be equivalent to '39936Tc(=624Ts=20us)';
For frame structure type 2, for NR in the frequency band corresponding to Frequency Range 2, the N_{TAoffset} can be equivalent to '13792Tc(=215.5Ts=7us)'.

### <The present disclosure>

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

Communication between an aircraft or airplane located on the ground and a base station on the ground is being discussed. The aircraft or airplane may be referred to, for example, as an Air to Ground (ATG) User Equipment (UE). However, due to timing delays between the base station on the ground and the ATG UE, efficient communication has traditionally not been achieved. For example, according to the prior art, in air vehicle communications in NR and communications based on the TDD band, there is no prior art regarding the behavior of the terminal and/or the behavior of the network taking into account large cell coverage.

The present disclosure describes various examples for addressing problems caused by timing delays in NR-based communications between ground networks and ATG UEs (e.g., aircraft, airplanes, etc.). For example, various examples of terminal (e.g., UE) behavior and/or network behavior to address timing advance issues due to timing delays and neighbor cell measurement issues due to timing delays are described herein.

For example, in an airborne communication environment with an Inter-Site Distance (ISD) of up to 300 kilometers, communication may be based on the TDD band. In this case, the long delay between the terminal and the network can cause various problems. For example, timing issues, UL/DL overlap issues, measurement behavior issues, etc. can occur. To address these issues, various examples of the present disclosure will describe examples of methods for calculating TA, examples of scheduling restrictions to avoid UL/DL overlap, and/or examples of performing measurement operations on neighboring cells.

In 5G and/or 6G, communication between a ground-based base station (e.g., gNB) and a ground-based terminal (e.g., UE) may be considered, as well as communication between a ground-based station and a flying vehicle such as an aircraft (e.g., Air to Ground UE (ATG UE)).

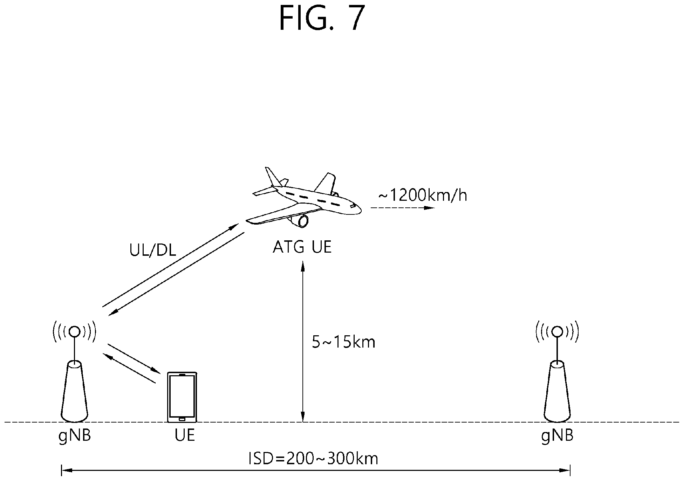

Referring to the example in Figure 7, an example of air to ground (ATG) communication is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 7** **illustrates an example in which ATG communication is performed.**

Referring to FIG. 7, an ATG UE moving in the air, a gNB located on the ground, and a UE are shown.

The example in Figure 7 shows an example of communication between a ground base station and an ATG UE (aircraft such as an airplane). The ISD between base stations may be 200 to 300 kilometers. Considering the 200-300 km ISD between base stations, operators can configure a large cell radius per base station to serve airborne vehicles (e.g., ATG UEs). If the ATG UE is an airplane, the ATG UE may have an altitude of 5 to 15 km and a traveling speed of up to about 1200 km/h. Therefore, ATG UEs have a different communication environment than traditional ground terminals.

Considering the altitude of the ATG UE and the cell radius, the distance between the gNB and the ATG UE can be in the range of 150 to 200 kilometers. For example, the distance between the gNB and the ATG UE, 150 to 200 km, may be similar to the distance from the cell center to the cell edge. Since the distance between the gNB and the ATG UE is in the range of 150 to 200 km, it can be assumed that a time delay between the gNB and the ATG UE is in the range of 500 to 670 usec. For example, a time delay of 500 to 670 usec may occur while the signal propagates over a distance of 150 to 200 km. This 500-670 usec time delay can result in a time delay of half a slot if 15 kHz Subcarrier Spacing (SCS) is used. Due to the 500 to 670 usec time delay, a time delay of one slot can occur when 30 kHz SCS is used. This time delay can cause scheduling issues in the gNB and timing advances in the ATG UE.

In the following, the present disclosure is described using an airplane performing communications based on the TDD frequency band as an example of an ATG UE. However, this is for illustrative purposes only, and the scope of the disclosure is not limited to airplanes performing communications based on TDD, i.e., the disclosure may also apply to communications based on FDD and other types of ATG UEs.

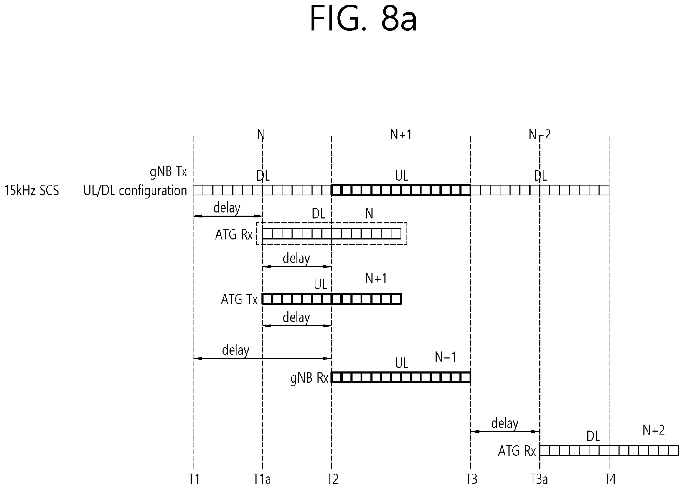

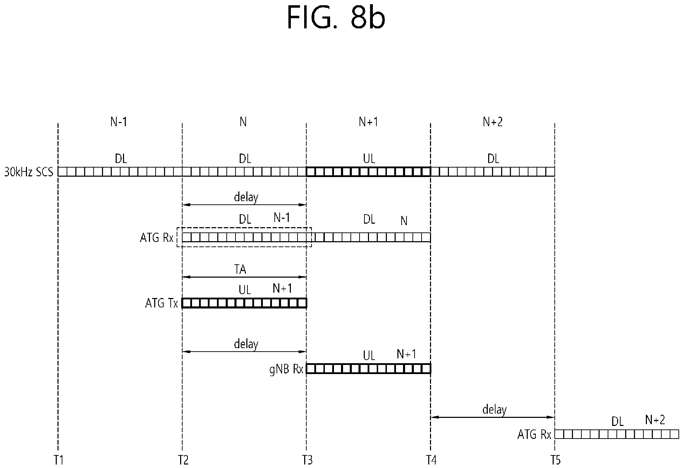

Referring now to FIG. 8, an example of overlapping Uplink (UL) and Downlink (DL) signals due to time delay is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIGS. 8a** **and** **8b** **illustrate an example of overlapping ULs and DLs due to delay, according to one embodiment of the disclosure.**

In the examples of FIG. 8a and FIG. 8b, ATG Rx represents the ATG UE receiving. ATG Tx represents the ATG UE transmitting. gNB Tx represents transmitting by the gNB. gNB Rx represents the gNB receiving. Delay may refer to the time delay before the signal transmitted between the ATG UE and the gNB arrives, due to the distance between the ATG UE and the gNB.

As mentioned earlier, in ATG communications, a time delay of 500 to 670 usec can occur while the signal propagates over a distance of 150 to 200 kilometers. If 15 kHz Subcarrier Spacing (SCS) is used, the delay can be as much as half a slot. If 30 kHz SCS is used, the time delay can be as much as one slot. The example in Figure 8a shows an example when 15 kHz SCS is used, and the example in Figure 8b shows an example when 30 kHz SCS is used.

Consider the example in Figure 8a. When a 15 kHz SCS is used, the length of one slot may be 1 ms. Assuming that a time delay of 500 to 670 usec occurs, the delay may be about the length of half a slot, as shown in the example of FIG. 8a. Specifically, the DL signal transmitted by the gNB at T1 may be received by the ATG at time T1a due to the delay. For example, the difference between T1 and T1a is the delay time. The UL signal of the N+1 slot transmitted by the ATG UE at T1a may be received by the gNB at T2. The signal of N+2 slot transmitted by the gNB at time T3 can be received by the ATG UE at time T3a.

Consider the example in Figure 8b. When a 30 kHz SCS is used, the length of one slot may be 0.5 ms. Assuming that a time delay of 500 to 670 usec occurs, a delay of the length of 1 slot may occur, as shown in the example of FIG. 8b. Specifically, the DL signal of slot N-1 transmitted by the gNB at T1 may be received by the ATG at time T2 due to the delay, i.e., the difference between T1 and T2 is the delay time. The UL signal of slot N+1 transmitted by the ATG UE at time T2 may be received by the gNB at time T3. The signal of slot N+2 transmitted by the gNB at time T4 can be received by the ATG UE at time T5.

As shown in the examples in Figs. 8a and 8b, it can be assumed that the time delay between the gNB and the ATG UE is 500 usec. Then, if the terminal (e.g., ATG UE) needs to apply timing advance (T_{TA}) for UL transmission, the maximum value of N_{TA} should be set according to the cell radius. For example, the N_{TA} value may be a value that adjusts the timing of the terminal's signal transmission so that the base station can receive the signals transmitted by the terminal at the same timing. As the cell radius increases, the distance between base stations increases and the latency increases, so the range over which the N_{TA} value should adjust the transmission timing of the terminal increases. As the range of N_{TA} values increases, the signaling overhead may increase. For example, the base station sends a conventional N_{TA} to the UE based on a 6-bit TA command file. Based on the conventional N_{TA}, the time may be adjusted between -16.3 usec and +16.3 usec. Since the cell radius of ATG communication may be 200 kilometers, timing adjustments of +/-300 usec or more may be possible. Compared to the conventional +/-16.3 usec, more bits need to be defined to represent +/-300 usec. Also, due to the high speed of the airplane, the N_{TA} may need to be updated frequently. This can result in high signaling overhead according to the prior art.

On the other hand, as described in various examples of the present disclosure, based on N_{TA_specific}, the terminal may compensate for a long delay between the base station and the terminal by calculating (estimating) the delay itself. Furthermore, in different examples of the present disclosure, the existing N_{TA} can be used as is, and even if the airplane speed is higher, and the network does not update the N_{TA} more frequently, the signaling due to the N_{TA} may not increase because the terminal continues to compensate for the delay.

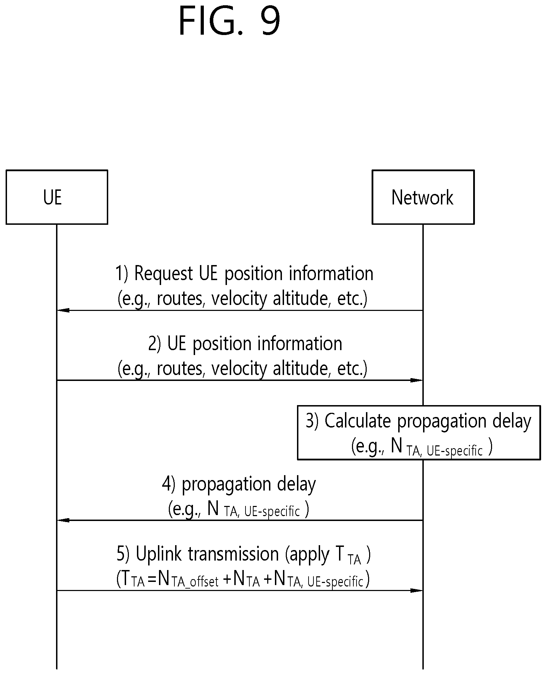

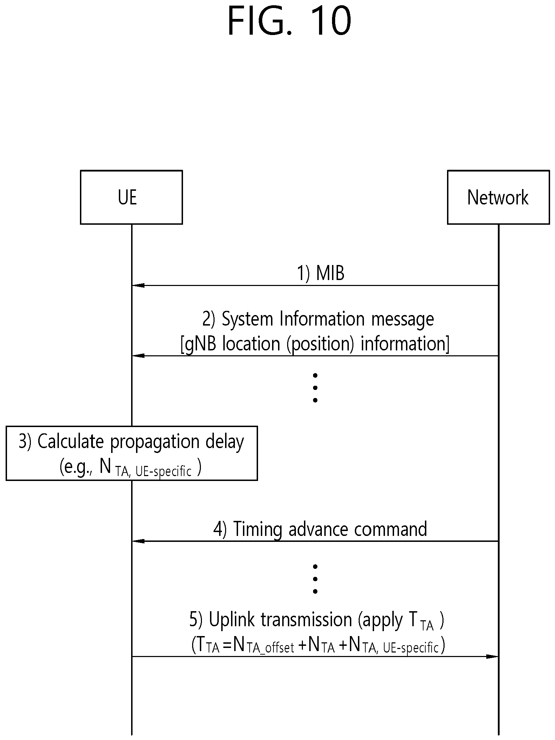

Thus, instead of increasing the range of NTA values, the present disclosure proposes to calculate a delay (e.g., N_{TA,specific}) between the gNB and the terminal and use N_{TA,specific}. For example, the gNB and/or the terminal may compute a delay (e.g., N_{TA,specific}) between the gNB and the terminal. Note that delay herein may refer to a propagation delay. Then, the gNB and/or the terminal may apply the delay (e.g., N_{TA,specific}) to the T_{TA} (T_{TA} = N_{TA_offset} + N_{TA} + N_{TA,specific}). Two example methods (first example and second example) of calculating N_{TA,specific} are described in the present disclosure. The first example of the method is described with reference to the example in FIG. 9. The first example of the method is described with reference to the example of FIG. 10.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 9** **illustrates a first example of a method for calculating propagation delay.**

Referring to FIG. 9, a first example of a method for calculating propagation delay is shown. The first example is an example of a network (e.g., a gNB) calculating a propagation delay (N_{TA,specific}).

The terminal may inform the gNB of the terminal's location information (e.g., position, course, speed, altitude, etc.). The gNB may calculate the N_{TA,specific} based on the location information transmitted by the terminal. For example, the gNB may calculate the N_{TA,specific} based on the location information (e.g., location, course, speed, altitude, etc.) of the terminal and the location information of the gNB. The gNB may then transmit the N_{TA,specific} to the terminal.

The gNB may periodically inform the terminal of the N_{TA,specific}.

Alternatively, the gNB may calculate the N_{TA,specific} based on the location information provided by the terminal, and the gNB may communicate the N_{TA,specific} to the terminal. After the gNB communicates the N_{TA,specific} to the terminal, the terminal may update the N_{TA,specific} directly based on the terminal's location information (e.g., position, course, speed, altitude, etc.). The terminal may also apply its updated N_{TA,specific} to T_{TA}.

The receive timing correction from the gNB for UL transmissions from the terminal may be outside the set range of the N_{TA} value. In this case, the gNB may request the terminal to re-request the terminal's position information (e.g., position, course, speed, altitude, etc.). Optionally, the terminal may report an updated N_{TA,specific} to the gNB. For example, if the base station (e.g., gNB) wishes to use delay time for communication with the terminal, the base station may request an updated N_{TA,specific} from the terminal. For example, when the base station perform operations related to a scheduling restriction, etc. based on the latency with the terminal, the base station may request an updated N_{TA,specific} from the terminal.

According to the example of FIG. 9, a network (e.g., a gNB) may calculate a propagation delay (e.g., N_{TA,specific}) between the gNB and the UE based on the UE location information reported by the UE and the location information of the (serving) gNB.

Specifically, the example in FIG. 9 is described as follows. Note that the network may be, for example, a gNB. Note that UE may be used interchangeably with terminal in the disclosure herein. And, as disclosed herein, the UE may mean an ATG UE.
1) The network may send a request message for requesting the UE's location information (e.g., location, course, speed, altitude, etc.), to the UE.
2) The UE may transmit location information (e.g., location, course, speed, altitude, etc.) to the network.
3) The network can calculate the propagation delay (e.g., N_{TA,specific}) For example, the network may calculate the propagation delay (e.g., N_{TA,specific}) based on the UE's location information (e.g., location, course, speed, altitude, etc.) and the network's location information.
4) The network may send information related to propagation delay (e.g., N_{TA,specific}) to the UE.
5) The UE may transmit the uplink signal. Based on the timing advance, the UE may determine the transmission timing of the uplink signal. For example, the UE may apply the timing advance (e.g., T_{TA}) to transmit the uplink signal. For example, the UE may determine the T_{TA} based on T_{TA} = N_{TA_offset} + N_{TA} + N_{TA,specific}.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 10** **illustrates a second example of a method of calculating propagation delay.**

The gNB may inform the terminal of the location information of the gNB. The terminal may calculate N_{TA,specific} based on the terminal's location information (e.g., location, course, speed, altitude, etc.). For example, the terminal may calculate N_{TA,specific} based on the terminal's location information (e.g., location, course, speed, altitude, etc.) and the gNB's location information. Optionally, the terminal may report the N_{TA,specific} to the gNB. For example, if the base station (e.g., the gNB) wants to use delay time to communicate with the terminal, the base station may request an updated N_{TA,specific} from the terminal. For example, when the base station perform operations related to a scheduling restriction, etc. based on the latency with the terminal, the base station may request an updated N_{TA,specific} from the terminal.

According to the example of FIG. 10, the UE may calculate a propagation delay (e.g., N_{TA,specific}) between the gNB and the UE based on the UE location information and the location information of the (serving) gNB broadcasted by the network.

The receive timing correction from the gNB for UL transmissions from the terminal may be outside the configuration range of the NTA value. In this case, the gNB may request the terminal to re-request the terminal's location information (e.g., position, course, speed, altitude, etc.). Optionally, the terminal may report an updated N_{TA,specific} to the gNB.

The example in Figure 10 is illustrated in detail.
1) The network may transmit Master Information Blocks (MIBs).
2) The network may transmit system information messages. For example, the network may broadcast system information messages. The system information message may include location information of the gNB.
3) The UE may calculate the propagation delay (e.g., N_{TA,specific}). For example, the UE may calculate the propagation delay (e.g., N_{TA,specific}) based on the UE's location information (e.g., location, course, speed, altitude, etc.) and the network's location information.
4) The network may transmit a timing advance command message to the UE. The timing advance command message may instruct the UE to apply a timing advance (e.g., N_{TA}). For example, the base station may send a timing advance command message when the base station receives a signal transmitted by the UE and the timing of the UE's reception is different from the timing expected by the base station.
5) The UE may transmit the uplink signal. Based on the timing advance, the UE may determine the transmission timing of the uplink signal. For example, the UE may apply the timing advance (e.g., T_{TA}) to transmit the uplink signal. For example, the UE may determine the T_{TA} based on T_{TA} = N_{TA_offset} + N_{TA} + N_{TA,specific}.

In the following, one example of a scheduling restriction is described, based on one embodiment of the present disclosure.

In the case of TDD, due to the long delay between the gNB and the terminal, the T_{TA} has to be considered as a larger value compared to T_{TA} of FDD. Therefore, it may happen that the terminal does not receive DL slots or DL symbols that are preceded by UL slots or UL symbols.

For example, depending on the distance between the gNB and the terminal, the terminal may not be able to receive DL signals or transmit UL signals for up to 14 symbols, as shown in the example in Figure 8b. Alternatively, propagation delays may affect the 2 slots.

The scheduling restriction symbol may be determined based on the propagation delay (e.g., NTA,specific) between the gNB and the terminal. For example, the gNB may determine the scheduling restriction symbol based on the propagation delay (e.g., N_{TA,specific}) between the gNB and the terminal. Here, the scheduling restriction symbol may mean a symbol for which scheduling is restricted. Based on the propagation delay information, the gNB may schedule a DL signal or a UL signal (e.g., allocated DL symbol). For example, the gNB may allocate DL symbols and/or UL symbols based on propagation delay.

The terminal may measure the propagation delay between the gNB and the terminal and transmit the propagation delay to the gNB. Alternatively, the gNB may infer the propagation delay based on the location information of the terminal (e.g., location, course, speed, altitude, etc.). The gNB may schedule for a DL slot or DL symbol preceding a UL slot or UL symbol without propagation delay information. For example, the gNB may schedule for a DL slot or DL symbol preceding a UL slot or UL symbol without considering propagation delay. In this case, the DL signal may not be received because the terminal applies a long TA for UL transmission. For example, as shown in the example in Figure 8b, an ATG UE may transmit a UL signal in UL slot N+1 at timing T2 with a TA of 1 slot length, and the gNB may transmit a DL signal in DL slot N-1 at timing T1 without considering the propagation delay. Then, during the time between T2 and T3, the ATG UE may not receive the DL signal of slot N-1 because it needs to transmit the UL signal, as shown in the example in Figure 8b.

Considering these cases, for the corresponding DL slot or the corresponding symbol (e.g., a slot or symbol on the downlink that overlaps with the uplink transmission time, if TA is applied for uplink transmission), the terminal may exclude to or may not be expected to receive/measure transmissions for reference signals, RRC signals, MAC CEs, etc. for RRM measurements or configuration changes. For example, the base station may exclude the transmission of signals such as reference signal for RRM measurement or RRC signal for configuration change/MAC CE, etc. on the DL slot or the symbol, or may not expect the terminal may not be expected to receive/measure those signals if they are transmitted.

In some cases, the terminal may not be able to transmit the UL signal in order to receive the DL signal. In this case, a delay may be added to the feedback transmitted by the terminal such as CSI / measurement reporting. In the part where the UL signal with TA is overlapped with the DL signal, it is possible to partially restrict the scheduling of DL symbols and UL symbols. For example, if the base station do scheduling restrictions on UL slots/symbols, the scheduling restricted UL slots/symbols may prevent the terminal from transmitting to CSI/measurement reporting. As a result, feedback delay may occur that delays feedback (e.g., CSI/measurement reporting) from the terminal. Here, for DL symbols and UL symbols, a base station doing a partial scheduling restriction may mean, for example, the following. The base station may not restrict the scheduling of only the DL in the overlapping portion, but may restrict the scheduling of certain symbols of the DL and certain symbols of the UL in the overlapping symbols. For example, the base station may restrict the scheduling of DL and UL symbols in a certain ratio (e.g., 50:50) for the DL and UL overlapping segments. The ratio can be configured by the base station.

As illustrated in the example of FIG. 8b, when 30 kHz SCS is used, at timing T2, the terminal may transmit the UL signal of slot N+1. After the terminal transmits the UL signal on slot N+1, the terminal may receive the DL signal of slot N at T3. At this time, the terminal may perform a Tx to Rx switching operation at T3. Considering the switching time of the terminal, the terminal may not transmit some UL symbols or receive some DL symbols. The switching time may be, for example, 13usec. For example, considering the error time of the receive DL slot boundary, the terminal may not transmit or receive 1 symbol of UL or DL symbols.

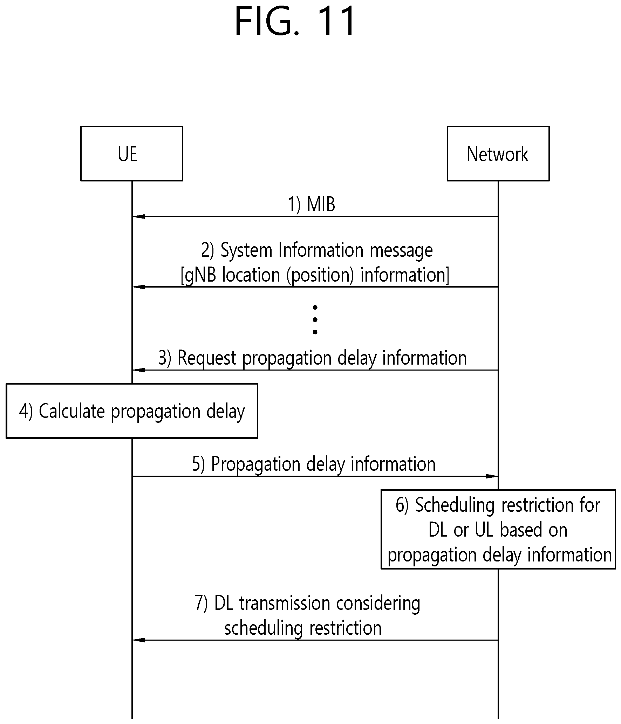

In the following, procedures related to scheduling restrictions based on propagation delay are described, with reference to the example of FIG. 11.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 11** **illustrates an example of a scheduling restriction based on propagation delay, according to one embodiment of the disclosure.**

Referring to FIG. 11, a flow chart related to a scheduling restriction based on propagation delay is shown.

The UE may not be expected to transmit control signaling, data, and/or UL signal, or receive control signal, data, and/or UL signal, on scheduling restricted symbols or scheduling restricted slots.

The following describes the example in Figure 11 in more detail.
1) The network may transmit MIBs.
2) The network may transmit system information messages. For example, the network may broadcast system information messages. The system information message may include location information of the gNB.
3) The network may transmit a message for requesting information related to propagation delay to the UE.
4) The UE may calculate the propagation delay. For example, the UE may calculate the propagation delay in the same manner as previously described in step 3 of the example in FIG. 10.
5) The UE may transmit information related to propagation delay, to the network.
6) The network may perform scheduling restrictions based on propagation delay. For example, the network may determine scheduling restrictions for the downlink (DL) or uplink (UL) based on the information related to the propagation delay. And, the network may determine DL slots and/or symbols and UL slots and/or symbols for which scheduling is restricted.
7) The network may transmit the DL signal to the UE. The network may perform DL transmission based on scheduling restrictions. For example, the network may not assign control signal and/or data to DL slots with scheduling restrictions and/or signals with scheduling restrictions. For example, the network may not expect the UE to transmit UL signaling on UL slots and/or signals with scheduling restrictions.

The following describes an example of using deriveSSB-IndexFromCell based on the propagation delay, according to one embodiment of the present disclosure. For example, an example of considering propagation delay in an operation of enabling or disabling deriveSSB-IndexFromCell to receive or measure a signal from a neighboring cell is described below.

In an ATG environment, the cell radius is larger than in a traditional terrestrial network environment. Accordingly, depending on the location of the terminal, the difference in signal reception timing from the serving cell and neighboring cells can be up to one slot or more. For example, the difference between the timing of when the terminal receives a signal from the serving cell and the timing of when the terminal receives a signal from a neighboring cell (i.e., a neighbor cell) may be more than one slot.

Therefore, even in a TDD environment, the serving cell may not always enable deriveSSB-IndexFromCell (or deriveSSB-IndexFromCellInter), and the terminal may always need to perform Physical Broadcast Channel (PBCH) detection for neighboring cells. Here, deriveSSB-IndexFromCell (or deriveSSB-IndexFromCellInter) may be information that instructs the terminal to derive the reception timing of the neighboring cell from the reception timing of the serving cell. For example, if the reception timing of the serving cell and the reception timing of the neighboring cell are approximately the same, the serving cell may enable deriveSSB-IndexFromCell (or deriveSSB-IndexFromCellInter) and transmit deriveSSB-IndexFromCell (or deriveSSB-IndexFromCellInter) to the terminal. For example, in the conventional terrestrial communication environment, when communication based on TDD is performed, the cell radius is relatively smaller than the cell radius in the ATG environment. In the conventional terrestrial communication environment, when communication based on TDD is performed, the serving cell may enable deriveSSB-IndexFromCell (or deriveSSB-IndexFromCellInter), and the terminal may not perform PBCH detection for neighboring cells.

The terminal may also measure the propagation delay with neighboring cells. Note that neighboring cell and adjacent cell are used interchangeably herein. In such a case, the terminal and/or the network may enable deriveSSB-IndexFromCell if the difference in propagation delay between the serving cell and the neighboring cell is less than or equal to a certain amount of time (e.g., half a slot). In other words, when deriveSSB-IndexFromCell is enabled, the terminal may skip the PBCH detection operation for neighboring cells. The tolerance of deriveSSB-IndexFromCell is set to a certain number of symbols (e.g., 6 symbols), based on the propagation delay difference. A certain tolerance is allowed because the reception timing of a serving cell cannot be exactly the same when applied to its neighbors. For example, tolerance can mean a tolerance such that the timing of the terminal's reception of the serving cell's signal for the same slot and the timing of the neighbor's reception of the serving cell's signal for the same slot are almost identical. For reference, in the conventional communication environment, a tolerance of 1 symbol is allowed. Tolerance may vary depending on the cconfigured SCS.

Alternatively, if the difference in propagation delay is below a certain value, the gNB may further indicate to the terminal whether the terminal use deriveSSB-IndexFromCell. Here, the difference in propagation delay may mean the difference between the propagation delay of the signal transmitted by the serving cell to the terminal and the propagation delay of the signal transmitted by the neighbor cell to the terminal. Alternatively, if the difference in propagation delay is below a certain value, the terminal may determine whether to apply deriveSSB-IndexFromCell based on the difference in propagation delay. To enable the terminal to decide, the gNB may indicate a specific threshold value (based on the propagation delay difference) to the terminal or may configure the device with the specific threshold value. Alternatively, the gNB may preconfigure a specific threshold value (e.g., a threshold value based on the propagation delay difference) to the terminal, or a specific threshold value may be preconfigured to the terminal, so that the terminal can decide whether to use deriveSSB-IndexFromCell by itself. For FDD bands, deriveSSB-IndexFromCell can also be utilized with this information. For example, deriveSSB-IndexFromCell may be used based on a specific threshold value (e.g., a threshold value based on the propagation delay difference), even when communication is performed based on the FDD band.

The terminal can also report the propagation delay difference to the serving gNB. For example, if the terminal knows the location information of the serving gNB and the location information of the neighboring gNBs, the terminal may obtain the propagation delay difference by calculating the distance between the terminal and the serving gNB. For example, the terminal may calculate the propagation delay difference by calculating the distance between the terminal and the serving gNB and the distance between the terminal and the neighboring gNB. The terminal may then report the propagation delay difference to the serving gNB. In another example, if the terminal does not know the location information of the gNB, the terminal may infer the propagation delay difference based on the timing difference between the neighboring cell and the serving cell, based on the sync timing information of the SSB of the neighboring cell. The terminal may then report the propagation delay difference to the serving gNB.

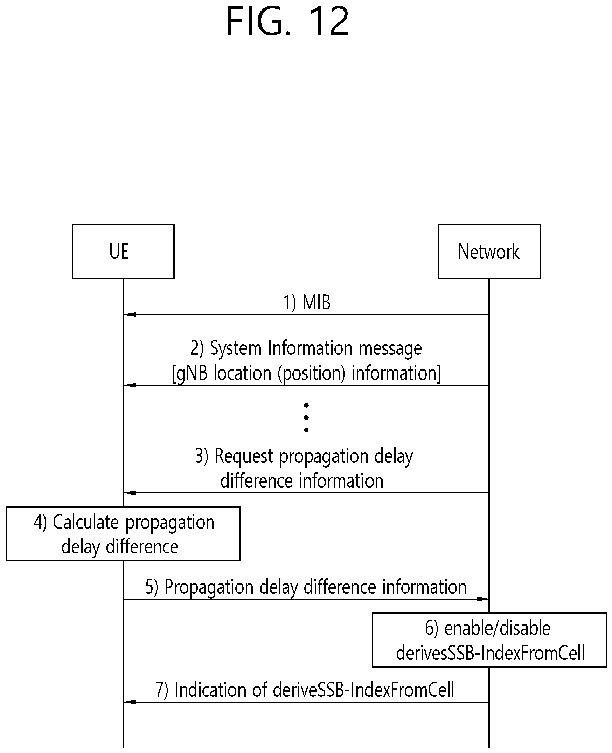

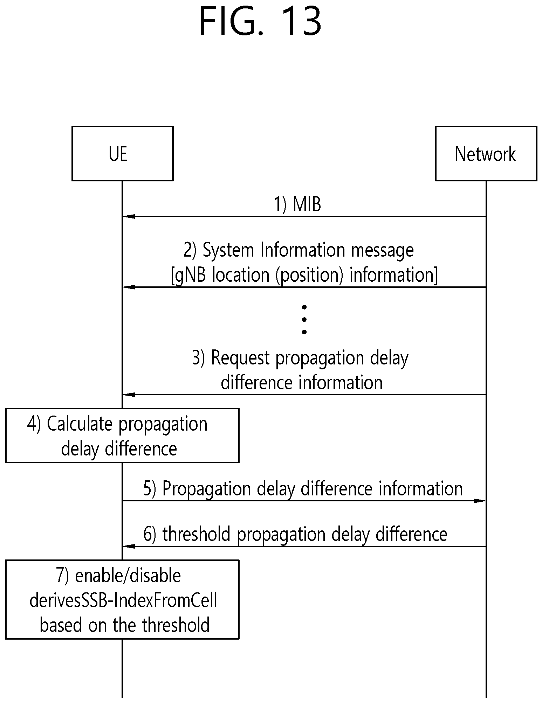

In the following, specific examples of enabling or disabling deriveSSB-IndexFromCell will be described, based on the example of FIG. 12 and the example of FIG. 13. FIGS. 12 and 13 are examples of procedures for enabling or disabling deriveSSB-IndexFromCell to measure a neighboring cell's signal. For example, the example in FIG. 12 is an example of a network enabling or disabling deriveSSB-IndexFromCell. For example, the example of FIG. 13 is an example of a UE enabling or disabling deriveSSB-IndexFromCell.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 12** **illustrates an example of a procedure for a network to enable or disable deriveSSB-IndexFromCell, according to one embodiment of the disclosure.**
1) The network (e.g., serving cell) may transmit MIBs.
2) The network may send system information messages. For example, the network may broadcast system information messages. The system information message may include the location information of the gNB.
3) The network may send a message to the UE requesting information related to the difference in propagation delay.
4) The UE may calculate the difference in propagation delay. For example, the UE may calculate the difference in propagation delay as previously described with reference to various examples.
5) The UE may transmit the difference in propagation delay information to the network.
6) The network may, based on the difference in propagation delay information, enable or disable deriveSSB-IndexFromCell. For example, the network may enable or disable deriveSSB-IndexFromCell based on the difference in propagation delay, as previously described with reference to various examples.
7) The network may transmit an indication related to the deriveSSB-IndexFromCell to the UE. For example, the indication related to deriveSSB-IndexFromCell may include information to enable or disable deriveSSB-IndexFromCell.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 13** **illustrates one example of a procedure for a UE to enable or disable deriveSSB-IndexFromCell, according to one embodiment of the present disclosure.**
1) The network (e.g., serving cell) may transmit MIBs.
2) The network may transmit system information messages. For example, the network may broadcast system information messages. The system information message may include location information of the gNB.
3) The network may send a message for requesting information related to the difference in propagation delay to the UE.
4) The UE may calculate the difference of propagation delay. For example, the UE may calculate the difference in propagation delay, as previously described with reference to various examples.
5) The UE may transmit information related to the difference of propagation delay to the network.

In the example of FIG. 13, the UE may decide for itself whether to apply deriveSSB-IndexFromCell based on the propagation delay difference.

6) The network may transmit to the UE a threshold value related to the propagation delay difference. For example, the threshold value related to the propagation delay difference may refer to a specific threshold value (e.g., a threshold value based on the propagation delay difference), as previously described in various examples.

7) The UE may enable or disable deriveSSB-IndexFromCell based on the information related to the difference of propagation delay. For example, the UE may enable or disable deriveSSB-IndexFromCell based on the propagation delay difference and a threshold value, as previously described with reference to various examples.

In the example of FIG. 12 or the example of FIG. 13, if deriveSSB-IndexFromCell is enabled, the terminal may determine the reception timing of the neighboring cell based on the reception timing of the serving cell. In this case, the terminal may not perform the operation of detecting the PBCH of the neighboring cell. If deriveSSB-IndexFromCell is disabled, the terminal may perform an operation to detect the PBCH of the neighboring cell to determine the reception timing of the neighboring cell.

The following describes an example of performing measurements on neighboring cells based on SS/PBCH Block Measurement Timing Configuration (SMTC) windows, based on differences in propagation delay. For example, an example of setting an SMTC window based on a difference in propagation delay is described.

The serving gNB may also set SMTC for neighboring cells separately, based on propagation delay differences. Alternatively, the serving gNB may configure an SMTC window that may include all SSBs of neighboring cells, based on the propagation delay difference.

Based on the configuration for SSB, the serving gNB may cconfigure the timing of SSB measurements of neighboring cells via SMTC. For example, based on the configuration for SSB, the serving gNB may set the SMTC so that the UE can measure the SSB of the neighboring cell within the SMTC window. For FR1, the maximum number of times SSB is set (maximum number of SSB settings) (e.g., Lₘₐₓ) over a range of frequency bands may be considered as follows. Here, the maximum number of SSBs set can mean the maximum number of SSBs set within a 5 ms long SMTC window. SSBs may be set in a maximum of 4 slots. For example, the maximum length for which SSBs may be set may be up to 4 slots.

**[Table 6]**

| | |
|---|---|
| Carrier frequency range of PCell/PSCell | Lₘₐₓ |
| FR1, carrier frequency range ≤ 3GHz | 4 |
| FR1, carrier frequency range > 3GHz | 8 |

Table 6 shows an example of the maximum number of SSBs set for FR 1, depending on the range of frequency bands. If the carrier frequency band is 3 GHz or less, the maximum number is 4. If the carrier frequency range is above 3 GHz, the maximum number is 8. For example, if the frequency range is 3 GHz or less, a maximum of four SSBs can be transmitted within a 5 msec SMTC window. For example, if the frequency range is greater than 3 GHz but less than or equal to 6 GHz, a maximum of 8 SSBs can be transmitted within the 5 msec SMTC window.

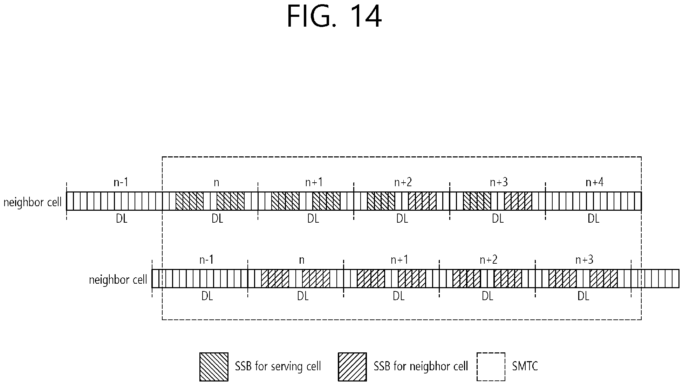

Referring to the example of FIG. 14, an example of SMTC window and SSB settings will be described below.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 14** **illustrates an example of an SMTC window and SS/PBCH block (SSB) (or Synchronization Signal Block) configuration, according to one embodiment of the disclosure.**

Referring to the example of FIG. 14, the illustrated SMTC window duration may include both the SSB of the serving cell and the SSB of a neighboring cell.

For example, as shown in the example in Figure 14, if the SCS is 15 kHz, the difference in propagation delay between the serving cell and the neighbor cell may be within 1 msec (one slot). In this case, a 5 msec SMTC duration can be used to measure both SSBs of the neighboring cells. In other words, the gNB may set the measurement (e.g., Reference Signal Received Power (RSRP), Reference Signal Received Quality (RSRQ), Received Signal Strength Indicator (RSSI), etc.) based on the SSBs of neighboring cells to the terminal when the propagation delay difference is below a certain value (e.g., Tmeas =1 msec). For example, if the serving gNB sets the SMTC window with a length of 5 msec, the difference in propagation delay may be below a certain value. In this case, the serving gNB may require the terminal to perform a measurement (e.g., RSRP, RSRQ, RSSI, etc.) based on the SSB of the neighboring cell within that SMTC window. If the propagation delay difference is greater than Tₘₑₐₛ, the terminal shall not make any measurement. If the device performs a measurement when the propagation delay difference is greater than Tₘₑₐₛ, the accuracy of the measurement may not be guaranteed.

The above description of the SMTC configuration is equally applicable to the configurationof the measurement gap. The description of the SMTC configuration may include, for example, setting whether to perform measurements on the SSB of a neighboring cell within the SMTC window. For example, a serving cell may, by setting the measurement gap, enable a UE to perform inter-frequency measurements for a neighboring cell that uses a different frequency band than the serving cell's frequency band. The serving cell may configure the UE to perform inter-frequency measurements of the neighboring cell based on whether the difference in propagation delay is greater than a threshold value.

Depending on the Discontinuous Reception (DRX) cycle length set for the terminal, the gNB may transmit a reference distance for the measurement time to the terminal so that the terminal can start measuring neighboring cells when the terminal is more than a certain distance from the gNB. The terminal can start measuring neighboring cells when one of the S criteria conditions (RSRP/RSRQ of the serving cell) and the reference distance set by the gNB is satisfied. Note that, based on the S criteria, the UE may evaluate the signal strength and quality of the current serving cell and adjacent (or neighboring) cells to determine whether cell reselection is required, based on a predefined threshold.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

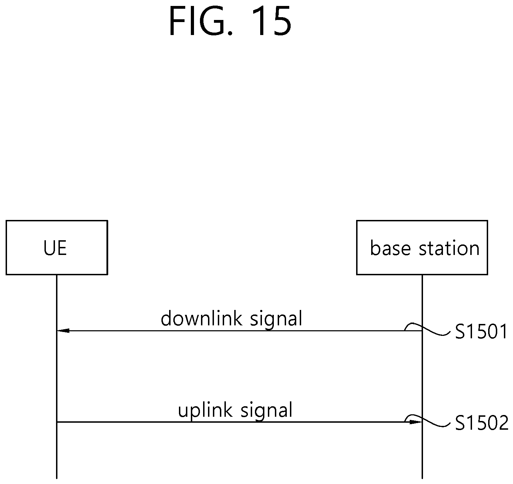

**FIG. 15** **illustrates an example of operation according to one embodiment of the disclosure.**

Further, the operation of the UE and/or the operation of the base station illustrated in the example of FIG. 15 is illustrative only. In the scope of the present disclosure, the behavior of the UE and/or the behavior of the base station is not limited by the example of FIG. 15, and the UE and/or the base station may perform any of the behaviors previously described in the various examples of the present disclosure. Of note, the UE may be a terminal, ATG UE, as described in various examples of the present disclosure. The base station may be a gNB, a network, a serving cell, a serving gNB, etc. as described in various examples of the present disclosure.

For example, the UE may perform any or all of the UE behaviors previously described in the various examples of the disclosure. For example, the base station may perform any or all of the network operations, serving cell operations, gNB operations, and serving gNB operations previously described in the various examples of the disclosure.

In step S1501, the base station may transmit a downlink signal to the UE. Here, the base station may refer to a serving cell. For example, the UE may receive a system information message from the serving cell. The system information message may include location information of the serving cell.

The base station may also send a message for requesting information related to the UE's location to the UE. The UE may send information related to the UE's location to the base station.

Based on various examples of the disclosure, the propagation delay may be calculated by a UE or a base station. For example, as described in various examples of the present disclosure, the propagation delay may be calculated by the UE, or the propagation delay may be calculated by the base station. For example, the UE or base station may calculate the propagation delay based on location information of the serving cell and information related to the location of the UE. Here, the information related to the location of the UE may include at least one of a location, a course, a speed, and/or an altitude of the UE.

The base station may also transmit a timing advance command message to the UE. Based on the receipt of the timing advance command message, the UE may apply a timing advance value for the transmission of the uplink signal.

If the base station calculates the propagation delay, the UE may receive information related to the propagation delay between the base station and the UE, from the base station.

In one example, the UE may receive a request message requesting information related to the propagation delay from the serving cell. In such case, the UE may calculate the propagation delay based on that the request message is received. The UE may then transmit the information related to the propagation delay to the serving cell. Based on the information related to the propagation delay transmitted by the UE, the serving cell may limit the downlink and/or uplink scheduling for the UE. Depending on the timing of the uplink transmission with propagation delay, the UE may not expect to transmit the uplink signal or receive the downlink signal for the interval where the transmission of the uplink signal and the reception of the downlink signal overlap.

In step S1502, the UE may transmit an uplink signal to the base station. The UE may apply the timing advance value to the timing of transmitting the uplink signal. Based on the timing advance value, the UE may transmit the uplink signal. Here, the timing advance value may be configured based on a propagation delay between the serving cell and the UE, as described in various examples of the present disclosure.

The present disclosure can have a variety of effects.

For example, in an air vehicle communication environment based on the TDD band, communications may be performed efficiently and/or accurately. For example, in such a communication environment, timing accuracy for transmitted and received signals of the terminal may be improved. For example, in such a communication environment, data loss may be avoided by limiting overlap between UL and DL. In such a communication environment, measurement accuracy may be improved, for example, by effectively establishing measurement bins.

The effects that may be obtained from the specific examples of this disclosure are not limited to those listed above. For example, there may be a variety of technical effects that a person having ordinary skill in the related art may understand or infer from this disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal(e.g., UE) may be the first device 100 or the second device 200 of FIG. 2. For example, an operation of a terminal(e.g., UE) of the present disclosure may be processed by one or more processors 102 or 202 . The operation of the terminal of the present disclosure may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal of the present disclosure by executing instructions/programs stored in one or more memories 104 or 204.

In addition, instructions for performing an operation of a terminal described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node or base station (e.g., NG-RAN, gNB, PCell, SCell, serving cell, serving gNB, network etc.) of the present disclosure may be implemented by the apparatus of FIGS. 1 to 3 to be described below. For example, a network node or a base station may be the first device 100 of FIG.2 or the second device 200 of FIG.2. For example, the operation of a network node or base station of the present disclosure may be processed by one or more processors 102 or 202. The operation of the terminal of the present disclosure may be stored in one or more memories 104 or 204 in the form of an instruction/program (e.g., instruction, executable code) executable by one or more processors 102 or 202. One or more processors 102 or 202 may perform the operation of a network node or a base station of the present disclosure, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims of the present disclosure may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A User Equipment (UE) for performing communication, the UE comprising:
one or more transceiver;
one or more processor; and
one or more computer memory operably connectable to the at least one processor and storing instructions that, based on being executed by the at least one processor, perform operations comprising:
receiving a system information message from a serving cell; and
transmitting an uplink signal, based on a timing advance value,
wherein the timing advance value is based on a propagation delay between the serving cell and the UE.

2. The UE of claim 1,
wherein the system information message includes location information of the serving cell,
wherein the operations further comprising:
calculating a propagation delay based on the location information of the serving cell and information related to the location of the UE.

3. The UE of claim 2,
wherein the information related to the location of the UE includes one or more of a location, a course, a speed, and/or an altitude of the UE.

4. The UE of claim 1, wherein the operations further comprising:
receiving a timing advance command message from the serving cell,
based on the timing advance command message is received, the timing advance value is applied for transmission of the uplink signal.

5. The UE of claim 1, wherein the operations further comprising:
receiving a message for requesting information related to the location of the UE from the serving cell; and
transmitting the information related to the location of the UE to the serving cell.

6. The UE of claim 5, wherein the operations further comprising:
receiving information related to a propagation delay between the serving cell and the UE from the serving cell.

7. The UE of claim 2, wherein the operations further comprising:
receiving a request message for requesting the information related to the propagation delay from the serving cell.

8. The UE of claim 7,
wherein the propagation delay is calculated based on the request message being received.

9. The UE of claim 7, wherein the operations further comprising:
transmitting information related to the propagation delay to the serving cell,
wherein the information related to the propagation delay being used by the serving cell to restrict scheduling of the uplink or smeeting of the downlink.

10. The UE of claim 7,
based on uplink transmission timing to which the propagation delay is applied, the UE is not expected to transmit the uplink or receive the downlink signals in the overlapping interval between the transmission of the uplink signal and the reception of the downlink signal.

11. A method for performing communication, the method is performed by a User Equipment (UE) and comprising:
receiving a system information message from a serving cell; and
transmitting an uplink signal, based on a timing advance value,
wherein the timing advance value is based on a propagation delay between the serving cell and the UE.

12. A serving cell for performing communication, the serving cell comprising:
one or more transceiver;
one or more processor; and
one or more computer memory operably connectable to the at least one processor and storing instructions that, based on being executed by the at least one processor, perform operations comprising:
transmitting a system information message to a User Equipment (UE); and
receiving an uplink signal from the UE,
wherein the uplink signal is transmitted by the UE, based on a timing advance value, and
wherein the timing advance value is based on a propagation delay between the serving cell and the UE.

13. A method for performing communication, the method is performed by a serving cell and comprising:
transmitting a system information message to a User Equipment (UE); and
receiving an uplink signal from the UE,
wherein the uplink signal is transmitted by the UE, based on a timing advance value, and
wherein the timing advance value is based on a propagation delay between the serving cell and the UE.

14. An apparatus in communication system, the apparatus comprising:
one or more processor; and
one or more computer memory operably connectable to the at least one processor and storing instructions that, based on being executed by the at least one processor, perform operations comprising:
receiving a system information message from a serving cell; and
transmitting an uplink signal, based on a timing advance value,
wherein the timing advance value is based on a propagation delay between the serving cell and the UE.

15. A non-transitory Computer Readable Medium (CRM) storing instructions that, based on being executed by at least one processor, perform operations comrprising:
receiving a system information message from a serving cell; and
transmitting an uplink signal, based on a timing advance value,
wherein the timing advance value is based on a propagation delay between the serving cell and the UE.
